# EUROPÄISCHE PATENTANMELDUNG

(11) **EP 4 722 001 A1**
(43) Veröffentlichungstag der Anmeldung: **08.04.2026**
(21) Anmeldenummer: 25199328.3
(22) Anmeldetag: 01.09.2025
(51) Int. Cl.: B60C 9/20, B60C 9/22, B60C 11/00, B60C 11/01

(54) **FAHRZEUGREIFEN**

(30) Priorität: 02.10.2024 DE 102024209700
(71) Anmelder: Continental Reifen Deutschland GmbH, 30175 Hannover (DE)
(72) Erfinder: Karow, Malte, 30175 Hannover (DE); Marschler, Christian, 30175 Hannover (DE); Römer, Justus, 30175 Hannover (DE); Berger, Christoph, 30175 Hannover (DE)
(74) Vertreter: Continental Corporation

(57) **Zusammenfassung**

Fahrzeugreifen mit einem profilierten Laufstreifen (1) mit einer Laufstreifenbreite TW45, einer Äquatorebene (A_{Q}), deren Schnittstelle mit der Außenkontur (A_{E}) des Laufstreifens (1) den Reifenzenit (Z) bildet, einem zumindest einlagigen Gürtelverband (2) und einer den Gürtelverband (2) überdeckenden Gürtelbandage (3).

Die Festigkeitsträger in der Gürtelbandage dehnungssteif mit einer Bruchdehnung gemäß ASTM D2969 Version 04 von 1% bis 6 % sind, wobei der Fahrzeugreifen eine derartige Außenkontur aufweist, dass innerhalb von in Umfangsrichtung des Reifens umlaufenden, symmetrisch in Bezug auf die Äquatorebene (A_{Q}) verlaufenden und konstant breiten schulterseitigen Abschnitten (S_{A}) des Laufstreifens (1) an jeder Stelle der schulterseitigen Abschnitte (S_{A}) der in radialer Richtung ermittelte Abstand (aₑ) zwischen der Außenkontur (A_{E}) und einer in axialer Richtung verlaufenden, den Reifenzenit (Z) berührenden Geraden (Lz) kleiner als 3,00 mm ist und über die Breite der schulterseitigen Abschnitte (S_{A}) in Richtung zur Laufstreifenaußenseite zunimmt.

## Beschreibung

Die Erfindung betrifft einen Fahrzeugreifen mit einem profilierten Laufstreifen mit einer Laufstreifenbreite TW45, einer Äquatorebene, dessen Schnittstelle mit der Außenkontur des Laufstreifens den Reifenzenit bildet, einem zumindest einlagigen Gürtelverband und einer den Gürtelverband überdeckenden Gürtelbandage mit in Umfangsrichtung umlaufenden Festigkeitsträgern, wobei der Gürtelverband und die Gürtelbandage bezüglich der Äquatorebene des Reifens symmetrisch ausgeführt sind.

Ein derartiger Fahrzeugreifen, welcher ein PKW-Fahrzeugluftreifen in Radialbauart ist, ist aus der EP 2 527 163 B1 bekannt. Der profilierte Laufstreifen ist derart mit Profilrillen versehen, dass deren maximale Tiefe innerhalb eines Mittenbereichs der Laufstreifenbreite TW45 gleich ist und in den schulterseitigen Abschnitten des Laufstreifens um maximal 2,00 mm kleiner ist als im Mittenbereich. Darüber hinaus ist der Reifen derart gestaltet, dass die Außenkontur des Laufstreifens im Mittenbereich flach ist, sodass die Außenkonturradiusdifferenz zwischen dem Zenit des Laufstreifens und dem axialen Ende des Mittenbereichs kleiner als 1,00 mm beträgt. Die Außenkontur des Laufstreifens im Bereich des Übergangs zu den schulterseitigen Abschnitten ist derart gestaltet, dass die Außenkonturradiusdifferenz zwischen dem Zenit und diesem Übergang zum Schulterbereich 3,00 mm bis 5,00 mm beträgt. Ein Reifen mit einer solchen Außenkontur im Laufstreifenbereich und einer bestimmten Verteilung der maximalen Rillentiefe in axialer Richtung zeigt Auswirkungen auf die Deformation des Gürtels, sodass eine Verbesserung der Leistungsmerkmale Abrieb, Quersteifigkeit und Rollwiderstand erzielt wird.

Es ist bekannt, dass eine gute Eisperformance, insbesondere eine gute Eishaftung, eines Fahrzeugreifens unter anderem dann gegeben ist, wenn möglichst viele Profilpositive im Bereich der Aufstandsfläche in Kontakt mit dem Untergrund kommen. Insbesondere ist es für ein gute Eisperformance vorteilhaft, wenn der Fahrzeugreifen eine möglichst breite, jedoch in Umfangsrichtung kurze und etwa kastenförmige Aufstandsfläche aufweist. Vor allem bei sogenannten Nordic-Reifen, also Reifen, die unter extremen winterlichen Bedingungen gefahren werden, wäre eine derartige hinsichtlich Eishaftung und Eisgriffeigenschaften optimierte Aufstandsfläche besonders vorteilhaft. An Nordic Reifen werden wie an andere PKW-Reifen immer größere ökologische Anforderungen gestellt. Reifenkonzepte, bei welchen beispielsweise Stahl-Festigkeitsträger in der Gürtelbandage verwendet werden, haben den Nachteil, dass die Reifenaufstandsfläche unter Last, Luftdruck und Geschwindigkeit runder, schmaler und länger wird. Das geht mit einer deutlichen Abnahme der Eisperformance im Vergleich zu üblichen Reifen einher.

Der Erfindung liegt die Aufgabe zugrunde, einen Reifen der eingangs genannten Art derart zu gestalten, dass er eine für Nordic-Reifen, also Fahrzeugreifen, die unter extremen winterlichen Fahrbedingungen eingesetzt werden, optimierte Aufstandsfläche, die für eine gute Eisperformance sorgt, aufweist.

Gelöst wird die gestellte Aufgabe erfindungsgemäß dadurch, dass die Festigkeitsträger in der Gürtelbandage dehnungssteif mit einer Bruchdehnung gemäß ASTM D2969 Version 04 von 1% bis 6 % sind,
wobei der Fahrzeugreifen eine derartige Außenkontur aufweist, dass an jeder Stelle innerhalb von in Umfangsrichtung des Reifens umlaufenden, symmetrisch in Bezug auf die Äquatorebene verlaufenden und schulterseitigen Abschnitten des Laufstreifens,
welche sich jeweils innerhalb einer laufstreifeninnenseitigen Begrenzungslinie und einer laufstreifenaußenseitigen Begrenzungslinie befinden und eine Mindestbreite von 15,00 mm aufweisen,
der in radialer Richtung ermittelte Abstand zwischen der Außenkontur und einer in axialer Richtung verlaufenden, den Reifenzenit berührenden Geraden kleiner als 3,00 mm ist und über die Breite der schulterseitigen Abschnitte in Richtung zu den laufstreifenaußenseitigen Begrenzungslinien fortlaufend zunimmt,
wobei die laufstreifeninnenseitige Begrenzungslinie einen axialen Abstand von 65% von TW45/2 vom Reifenzenit und die laufstreifenaußenseitige Begrenzungslinie einen axialen Abstand von 90% von TW45/2 vom Reifenzenit aufweist.

Ein Fahrzeugreifen, der gemäß der Erfindung derart ausgelegt ist, dass der Abstand seiner Außenkontur in den schulterseitigen Abschnitten des Laufstreifens zu einer geraden Linie, die im Wesentlichen einer projizierten geraden Fahrbahnlinie entspricht, kleiner als 3,00 mm beträgt und mit einer dehnungsarmen Gürtelbandage ausgestattet ist, das Einstellen einer breiten, kurzen und kastenförmigen Aufstandsfläche ermöglicht, auch unter dynamischen Bedingungen. Der Fahrzeugreifen gemäß der Erfindung ist daher als Nordic-Reifen besonders gut geeignet, da seine breite und kastenförmige Aufstandsfläche vor allem auch schulterseitig mit Profilpositiven, wie Profilblöcken, optimalen Kontakt zum Untergrund hat und eine gute Eisperformance sicherstellt.

Bei einer bevorzugten Ausführung ist die Position der schulterseitigen Abschnitte innerhalb der Begrenzungslinien derart, dass jeder schulterseitige Abschnitt zur laufstreifeninnenseitigen Begrenzungslinie einen Abstand von bis zu 10 % der Laufstreifenbreite TW45 und von der laufstreifenaußenseitigen Begrenzungslinie einen Abstand von bis zu 2,5 % der Laufstreifenbreite TW45 aufweist. In diesem Bereich ist es für das Einstellen einer breiten und kurzen Aufstandsfläche von besonderer Bedeutung, dass der Abstand der Außenkontur zu der in axialer Richtung verlaufenden, den Reifenzenit berührenden Geraden kleiner als 3,00 mm ist.

Besonders vorteilhaft ist es dabei, wenn innerhalb der schulterseitigen Abschnitte des Laufstreifens der in radialer Richtung ermittelte Abstand zwischen der Außenkontur und der in axialer Richtung verlaufenden und den Reifenzenit berührenden Geraden an jeder Stelle ≤ 2,80 mm, bevorzugt ≤ 2,50 mm und besonders bevorzugt ≤ 2,30 mm ist.

Wie bereits erwähnt ist auch die dehnungssteife Gürtelbandage für das Einstellen der breiten, kurzen und kastenförmigen Aufstandsfläche mitverantwortlich. In diesem Zusammenhang ist es daher vorteilhaft, wenn die Festigkeitsträger in der Gürtelbandage eine Bruchdehnung gemäß ASTM D2969 Version 04 von höchstens 5 % aufweisen.

Die Festigkeitsträger in der Gürtelbandage können Korde oder Monofilamente sein und bevorzugt aus Stahl oder aus Aramid bestehen.

Des Weiteren ist es vorteilhaft, wenn die Gürtellagen des Gürtelverbands als Festigkeitsträger Stahlkorde oder Stahl-Monofilamente enthalten und wenn der Fahrzeugreifen eine Karkasseinlage aufweist, die als Festigkeitsträger Stahlkorde oder Stahl-Monofilamente enthält.

Weitere Merkmale, Vorteile und Einzelheiten der Erfindung werden nun anhand der Zeichnung, die schematisch ein Ausführungsbeispiel darstellt, näher beschrieben.

Dabei zeigen
Fig. 1, zeigt eine Querschnittshälfte eines erfindungsgemäßen Fahrzeugreifens und
Fig. 2 im Querschnitt einen Teilbereich der Außenkontur des Fahrzeugreifens zur Ermittlung von TW45.

Gemäß der Erfindung ausgeführte Fahrzeugreifen sind Reifen für Personenkraftwagen (PKWs), Vans (Transporter) oder SUVs, vorzugsweise Fahrzeugluftreifen in Radialbauart und insbesondere für Felgen mit einem ganzzahligen Felgendurchmesser von 13 Zoll bis 24 Zoll und mit einem Traglastindex von 71 bis 126. Die Fahrzeugreifen sind bevorzugt Fahrzeugluftreifen, vorzugsweise sogenannte Nordic-Reifen, also Fahrzeugluftreifen, die für einen Einsatz unter extremen winterlichen Fahrbedingungen, auf eisbedeckten oder schneebedeckten Fahrbahnen, besonders geeignet sind.

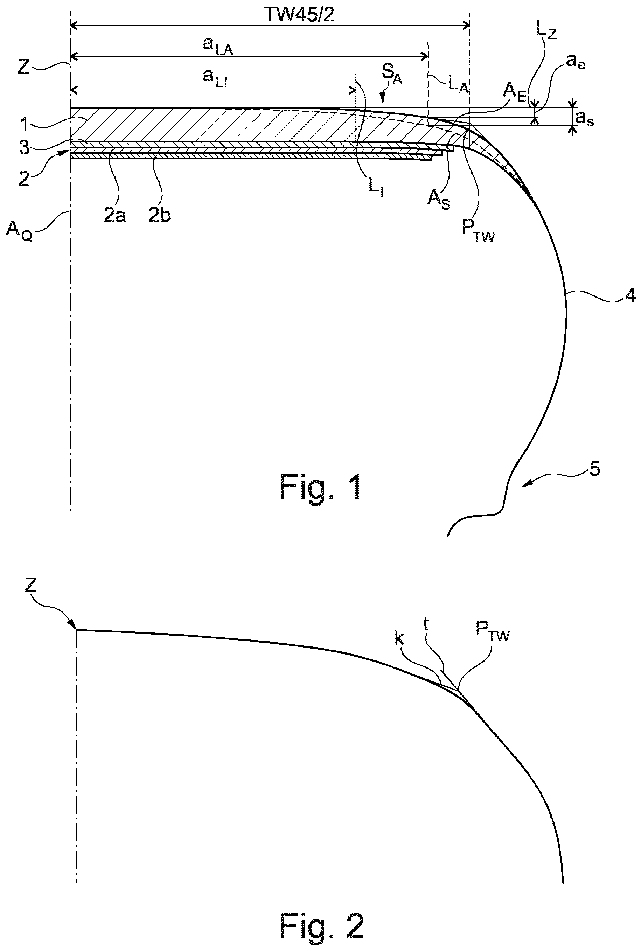

Fig. 1 zeigt eine Querschnittshälfte eines Fahrzeugreifens, welcher ein PKW-Reifen ist, wobei zum Teil lediglich die Außenkontur des Reifens dargestellt ist. Die zweite, nicht gezeigte Querschnittshälfte der Kontur ist bezüglich der durch die Linie A_{Q} gekennzeichneten Äquatorebene A_{Q} des Reifens spiegelsymmetrisch gestaltet. Die in Fig. 1 eingezeichnete durchgezogene Linie gibt die Außenkontur A_{E} eines erfindungsgemäßen Fahrzeugreifens wieder, die im Laufstreifenbereich eingezeichnete gestrichelte Linie die Außenkontur As eines Fahrzeugreifens aus dem Stand der Technik.

Fig. 1 zeigt ferner von den Bauteilen eines beispielhaften Fahrzeugreifens den Laufstreifen 1, einen Gürtelverband 2 bestehend aus zwei Gürtellagen 2a, 2b und eine Gürtelbandage 3, sowie anhand der Außenkontur A_{E} eine Seitenwand 4 und einen der Wulstbereiche 5. Radial innerhalb des Gürtelverbands 2 verläuft eine nicht dargestellte insbesondere einlagige Karkasseinlage, die bis zu den Wulstbereichen reicht und hier um nicht gezeigte Wulstkerne umgeschlagen ist. Die Karkassenlage besteht aus einem in ein Gummimaterial eingebettetem Gewebe mit in radialer Richtung orientierten Festigkeitsträgern, die textile Korde oder Stahlkorde sind. Der Laufstreifen 1 ist mit einer nicht gezeigten Profilierung, beispielsweise mit Umfangsrillen, Querrillen und Einschnitten, versehen.

Der Laufstreifen 1 wird über die Breite TW45 betrachtet, welche eine Laufstreifenbreite ist, die etwas breiter ist als die Breite des Reifenabdrucks im Untergrund, wenn der Reifen auf einer Felge montiert ist und unter Druck gesetzt ist. Die Breite TW45 ist der gegenseitige, axiale Abstand zweier Punkte P_{TW}, von welchen in Fig. 1 der eine dargestellt ist und deren Lage, wie Fig. 2 zeigt, wie folgt ermittelt wird: Jeder Punkt P_{TW} liegt im Schnittpunkt einer unter 45° zur radialen Richtung verlaufenden Tangente t an die jeweilige Reifenschulter mit einer flachen Kurve k, welche die tangentiale Verlängerung der Außenkontur des Laufstreifens 1, über den üblichen seitlichen Rand der Bodenaufstandsfläche hinaus, ist.

Die beiden Gürtellagen 2a und 2b sind insbesondere in herkömmlicher Weise aufgebaut und bestehen aus in eine Gummimischung eingebetteten und innerhalb jeder Lage 2a, 2b jeweils parallel zueinander verlaufenden Festigkeitsträgern, insbesondere Stahlkorden. Die gegenseitige Anordnung der Stahlkorde in den beiden Gürtellagen 2a, 2b ist derart, dass sich die in der einen Gürtellage 2a verlaufenden Stahlkorde mit jenen, die in der zweiten Gürtellage 2b verlaufen kreuzen. Die radial äußere Gürtellage 2a weist eine geringere Breite auf als die radial innere Gürtellage 2b.

Die Gürtelbandage 3 besteht beim dargestellten Ausführungsbeispiel aus einer sich über die Seitenränder der radial inneren Gürtellage 2b hinaus erstreckenden und diese abdeckenden Bandagenlage. Bei alternativen Ausführungen der Gürtelbandage 3 weist diese zwei aufeinander positionierte Bandagenlagen auf, von welchen die äußere eine geringere Breite aufweist als die innere. Bei weiteren alternativen Ausführungen weist die Gürtelbandage zusätzlich schulterseitig in Umfangsrichtung umlaufende Bandagenstreifen auf. Weitere, an sich bekannte Gürtelbandagenausführungen sind möglich. Die Gürtelbandage 3 ist insbesondere als Spulbandage erstellt, bei welcher zumindest ein Kautschukmischungsstreifen, in welchem Bandagenkorde oder Monofilamente in Streifenlängsrichtung verlaufend eingebettet sind, spiralig auf den Gürtelverband 2 gewickelt ist. Der gegenseitige Abstand der Bandagenkorde oder der Monofilamente innerhalb der Kautschukmischungsstreifen beträgt mindestens 0,20 mm und ist üblicherweise derart gewählt, dass die Fadendichte in der Gürtelbandage 3 80 epdm (ends per decimeter) bis 125 epdm beträgt. Alternativ ist die Gürtelbandage 3 durch spiraliges Wickeln von gummierten Bandagenkorden oder Monofilamenten erstellt worden.

Die Bandagenkorde, welche insbesondere aus zwei miteinander verdrehten Filamenten bestehen, oder die Monofilamente in der Gürtelbandage 3 bestehen aus hoch-festen Festigkeitsträgern, also aus einem eine geringe Dehnung aufweisendes Material, insbesondere aus Stahl oder Aramid. Die Festigkeitsträger der Gürtelbandage 3 weisen eine maximale Bruchdehnung von 6 %, insbesondere von 5%, gemäß ASTM D2969 Version 04 auf, die Mindestdehnung beträgt 1%.

Innerhalb der Breite TW45 sind im Laufstreifen 1 zwei schulterseitige Abschnitte S_{A} definiert, von welchen einer dargestellt ist. Jeder schulterseitige Abschnitt S_{A} befindet sich in einer Position, die durch eine laufstreifeninnenseitige, in Umfangsrichtung umlaufende Begrenzungslinie L_{I} und eine laufstreifenaußenseitige, in Umfangsrichtung umlaufende Begrenzungslinie L_{A} bestimmt ist, wobei die Begrenzungslinien L_{I} und L_{A} auf der durchgezogenen Außenkontur A_{E} mit Punkten verdeutlicht sind. Der schulterseitiger Abschnitt S_{A}, befindet sich innerhalb der Begrenzungslinien L_{I} und L_{A} und weist eine konstante Breite auf, die mindestens 15,00 mm beträgt und höchstens dem gegenseitigen Abstand der Begrenzungslinien L_{I} und L_{A} entspricht. Die laufstreifeninnenseitige Begrenzungslinie L_{I} befindet sich in einem axialen Abstand a_{LI} von 65% von TW45/2 vom Reifenzenit Z, die laufstreifenaußenseitige Begrenzungslinie L_{A} in einem axialen Abstand a_{LA} von 90% von TW45/2 vom Reifenzenit Z. Der Reifenzenit Z ist, im Querschnitt des Reifens betrachtet, der Schnittpunkt zwischen der Äquatorebene A_{Q} des Reifens und der Außenkontur A_{E} des Laufstreifens 1.

Bei einer bevorzugten Ausführung ist die Position der schulterseitiger Abschnitte S_{A} innerhalb der Begrenzungslinien L_{I} und L_{A} derart definiert, dass die schulterseitigen Abschnitte S_{A} zur laufstreifeninnenseitigen Begrenzungslinie L_{I} einen Abstand von bis zu 10% der Laufstreifenbreite TW45, zur laufstreifenaußenseitigen Begrenzungslinie L_{A} einen Abstand von bis zu 2,5% der Laufstreifenbreite TW45 aufweisen.

Die innerhalb dieser Begrenzungslinien L_{I} und L_{A} befindlichen schulterseitigen Abschnitte S_{A} sind als in Umfangsrichtung des Reifens umlaufende Laufstreifenabschnitte konstanter Breite zu verstehen, wobei die beiden schulterseitiger Abschnitte S_{A} symmetrisch sowie zentriert in Bezug auf den Reifenzenit Z ausgerichtet sind.

Fig. 1 zeigt eine Linie Lz, die eine in axialer Richtung und durch den Reifenzenit Z verlaufende Gerade ist. Innerhalb der schulterseitigen Abschnitte S_{A} beträgt der in radialer Richtung ermittelte Abstand aₑ, welcher in Fig. 1 beispielhaft an der laufstreifenaußenseitigen Begrenzungslinie L_{A} eingezeichnet ist, an jeder Stelle <3,00 mm, insbesondere ≤2,80 mm, bevorzugt ≤2,50 mm und besonders bevorzugt ≤2,30 mm. Beim Reifen gemäß dem Stand der Technik ist der in radialer Richtung vorliegende und durch die laufstreifenaußenseitige Begrenzungslinie L_{A} hindurch gehende Abstand aₛ zwischen der Außenkontur As und der Linie L_{Z} wesentlich größer als 3,00 mm und beträgt im Beispiel in der Größenordnung von 4,50 mm.

Die in Fig. 1 gezeigte Außenkontur A_{E} eines Fahrzeugreifens gemäß der Erfindung entspricht der über die Vulkanisationsform im Laufstreifen-Schulterbereich vermittelten Außenkontur. Die dehnungssteifen Filamente der Festigkeitsträger in der Gürtelbandage 3 sorgen dafür, dass diese Außenkontur auch bei unter Druck gesetztem Reifen erhalten bleibt.

Sämtliche der erwähnten Dimensionen beziehen sich auf einen auf einer Normfelge montierten Reifen mit einem Innendruck von 85 % des Normdrucks, jeweils gemäß E.T.R.T.O. -Standards in der zum Anmeldezeitpunkt geltenden Fassung.

### Bezugszeichenliste

- 1: Laufstreifen
- 2: Gürtelverband
- 2a, 2b: Gürtellage
- 3: Gürtelbandage
- 4: Seitenwand
- 5: Wulstbereich
- k: Kurve
- TW45: Laufstreifenbreite
- Lz: Linie
- P_{TW}: Punkt
- t: Tangente
- Z: Reifenzenit
- A_{Q}: Äquatorialebene
- A_{E}, A_{S}: Außenkontur
- S_{A}: schulterseitigerAbschnitt
- a_{LA}, a_{LI}: Abstand
- aₑ, aₛ: Abstand
- L_{I}, L_{A}: Begrenzungslinie

## Patentansprüche

1. Fahrzeugreifen mit einem profilierten Laufstreifen (1) mit einer Laufstreifenbreite TW45, einer Äquatorebene (A_{Q}), deren Schnittstelle mit der Außenkontur (A_{E}) des Laufstreifens (1) den Reifenzenit (Z) bildet, einem zumindest einlagigen Gürtelverband (2) und einer den Gürtelverband (2) überdeckenden Gürtelbandage (3) mit in Umfangsrichtung umlaufenden Festigkeitsträgern, wobei der Gürtelverband (2) und die Gürtelbandage (3) bezüglich der Äquatorebene (A_{Q}) des Reifens symmetrisch ausgeführt sind,
**dadurch gekennzeichnet,**
**dass** die Festigkeitsträger in der Gürtelbandage (3) dehnungssteif mit einer Bruchdehnung gemäß ASTM D2969 Version 04 von 1% bis 6 % sind,
wobei der Fahrzeugreifen eine derartige Außenkontur aufweist, dass innerhalb von in Umfangsrichtung des Reifens umlaufenden, symmetrisch in Bezug auf die Äquatorebene (A_{Q}) verlaufenden schulterseitigen Abschnitten (S_{A}) des Laufstreifens (1),
welche sich jeweils innerhalb einer laufstreifeninnenseitigen Begrenzungslinie (L_{I}) und einer laufstreifenaußenseitigen Begrenzungslinie (L_{A}) befinden und eine Mindestbreite von 15,00 mm aufweisen,
an jeder Stelle der in radialer Richtung ermittelte Abstand (aₑ) zwischen der Außenkontur (A_{E}) und einer in axialer Richtung verlaufenden, den Reifenzenit (Z) berührenden Geraden (Lz) kleiner als 3,00 mm ist und über die Breite der schulterseitigen Abschnitte (S_{A}) in Richtung zu den laufstreifenaußenseitigen Begrenzungslinien (L_{A})fortlaufend zunimmt,
wobei die laufstreifeninnenseitige Begrenzungslinie (L_{I}) einen axialen Abstand (au) von 65% von TW45/2 vom Reifenzenit (Z) und die laufstreifenaußenseitige Begrenzungslinie (L_{A}) einen axialen Abstand (a_{LA})von 90% von TW45/2 vom Reifenzenit (Z) aufweist.

2. Fahrzeugreifen nach Anspruch 1, **dadurch gekennzeichnet, dass** die Position der schulterseitigen Abschnitte (S_{A}) innerhalb der Begrenzungslinien (L_{I} und L_{A}) derart ist, dass jeder schulterseitige Abschnitt (S_{A}) zur laufstreifeninnenseitigen Begrenzungslinie (L_{I}) einen Abstand von bis zu 10% der Laufstreifenbreite TW45 und von der laufstreifenaußenseitigen Begrenzungslinie (L_{A}) einen Abstand von bis zu 2,5% der Laufstreifenbreite TW45 aufweist.

3. Fahrzeugreifen nach Anspruch 1 oder 2, **dadurch gekennzeichnet, dass** innerhalb der schulterseitigen Abschnitte (S_{A}) des Laufstreifens (1) der in radialer Richtung ermittelte Abstand (aₑ) zwischen der Außenkontur (A_{E}) und der in axialer Richtung verlaufenden und den Reifenzenit (Z) berührenden Geraden (Lz) an jeder Stelle ≤ 2,80 mm, bevorzugt ≤ 2,50 mm und besonders bevorzugt ≤ 2,30 mm ist.

4. Fahrzeugreifen nach einem der Ansprüche 1 bis 3, **dadurch gekennzeichnet, dass** die Festigkeitsträger in der Gürtelbandage (3) eine Bruchdehnung gemäß ASTM D2969 Version 04 von höchsten 5% aufweisen.

5. Fahrzeugreifen nach einem der Ansprüche 1 bis 4, **dadurch gekennzeichnet, dass** die die Festigkeitsträger in der Gürtelbandage (3) Korde oder Monofilamente sind.

6. Fahrzeugreifen nach einem der Ansprüche 1 bis 5, **dadurch gekennzeichnet, dass** die die Festigkeitsträger in der Gürtelbandage (3) aus Stahl oder aus Aramid bestehen.

7. Fahrzeugreifen nach einem der Ansprüche 1 bis 6, **dadurch gekennzeichnet, dass** die Gürtellagen (2a, 2b) des Gürtelverbands (2) als Festigkeitsträger Stahlkorde oder Stahl-Monofilamente enthalten.

8. Fahrzeugreifen nach einem der Ansprüche 1 bis 7, **dadurch gekennzeichnet, dass** er eine Karkasseinlage (6) aufweist, die als Festigkeitsträger Stahlkorde oder Stahl-Monofilamente enthält.
